# EUROPEAN PATENT SPECIFICATION

(11) **EP 2 669 103 B1**
(45) Date of publication and mention of the grant of the patent: **30.09.2015**
(21) Application number: 12739226.4
(22) Date of filing: 27.01.2012
(51) Int. Cl.: B60G 21/05

(54) **TORSION BEAM SUSPENSION**
VERBUNDLENKERFEDERUNG
SUSPENSION À BARRE DE TORSION

(30) Priority: 28.01.2011 JP 2011016836
(43) Date of publication of application: 04.12.2013
(73) Proprietor: Futaba Industrial Co. Ltd., Okazaki-shi, Aichi 444-8558 (JP)
(72) Inventor: SOMA, Kazutaka, Okazaki-shi Aichi 444-8558 (JP); MORIOKA, Yoshihiro, Okazaki-shi Aichi 444-8558 (JP); HIROTANI, Toshiji, Okazaki-shi Aichi 444-8558 (JP); ICHIYANAGI, Hidenari, Okazaki-shi Aichi 444-8558 (JP)
(74) Representative: Faulkner, Thomas John
(86) International application number: PCT/JP2012/051864
(87) International publication number: WO 2012/102389

(56) References cited:
- DE-A1- 4 008 706
- FR-A1- 2 701 901
- JP-A- 2005 081 905
- JP-A- 2007 083 995
- JP-U- 58 090 814
- US-A1- 2006 138 740

## Description

### CROSS-REFERENCE TO RELATED APPLICATIONS

This international application claims the benefit of Japanese Patent Application No. 2011-016836 filed January 28, 2011 in the Japan Patent Office, and the entire disclosure of Japanese Patent Application No. 2011-016836 is incorporated herein by reference.

### TECHNICAL FIELD

The present invention relates to a torsion beam suspension in which left and right trailing arms are connected to each other by a torsion beam.

### BACKGROUND ART

Conventionally, a torsion beam suspension is known in which left and right trailing arms are connected to each other by a torsion beam. For example, as disclosed in Patent Document 1, respective left and right trailing arms and a torsion beam are connected to each other by welding. On the other end of each of the trailing arms, a carrier is secured by welding, and a wheel is rotatably supported via the carrier. The carrier is formed by bending in a U shape in cross section. The carrier has a mounting wall formed therein. The mounting wall has a plurality of fastening holes formed therein. The fastening holes are used to mount a hub that rotatably supports the wheel.

### PRIOR ART DOCUMENTS

### PATENT DOCUMENTS

Patent Document 1: Japanese Unexamined Patent Application Publication No. 2005-008123

### SUMMARY OF THE INVENTION

### PROBLEMS TO BE SOLVED BY THE INVENTION

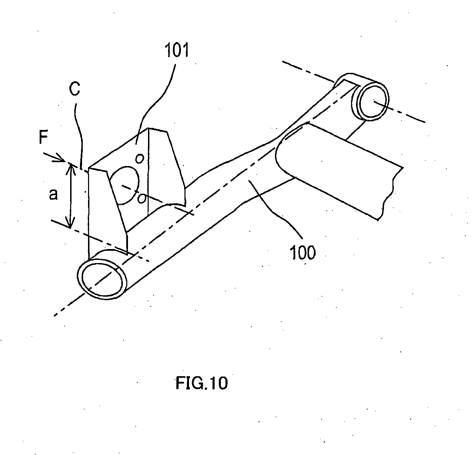

In reference to FIG. 10, in the conventional torsion beam suspension as described above, in which a carrier 101 is mounted to a trailing arm 100, when a force F acts on a rotation center C of a wheel, a moment is generated according to an offset amount "a" between the rotation center C and an axial center of the trailing arm 100. Therefore, the trailing arm 100 and the like are required to have stiffness appropriate for the moment. When trying to ensure the required stiffness, there arises a problem that the trailing arm 100 and the like, and eventually the torsion beam suspension become larger in size and heavier in weight.

It is desirable to provide a torsion beam suspension in which reduction in size is enabled and reduction in weight has been sought.

### MEANS FOR SOLVING THE PROBLEMS

The present invention relates to a torsion beam suspension for a vehicle including a left-right pair of trailing arms of a hollow shape, each trailing arm being swingably supported at one end thereof by a vehicle body and having at the other end thereof a carrier fixed thereto, via which a wheel is rotatably supported; and a torsion beam that connects the left-right pair of trailing arms to each other.

The carrier has a plurality of fastening holes formed therein, into which fastening members are inserted to mount to the carrier a wheel support member that rotatably supports the wheel.

The plurality of fastening holes are arranged such that some of the plurality of fastening holes overlap the trailing arm as viewed from an axial direction of an axle shaft.

In the trailing arms, tool insertion holes, into which a fastening tool for the fastening members is insertable, are formed in a penetrating manner so as to be positioned approximately coaxially with the fastening holes.

The carrier may include a mounting wall having the fastening holes formed therein and two side walls each formed at each side of the mounting wall. The side walls may be fixed to the trailing arm, and a gap for confirming fastening of the fastening members may be formed between the mounting wall and the trailing arm. The trailing arm may be formed by joining a pair of arm members together, which has an approximately U shape in cross section as divided along an axial direction of the trailing arm, and the tool insertion holes may be formed in each of the pair of arm members. Guide members that suppress the fastening members from falling down may be inserted into the tool insertion holes. The fastening holes may be provided four in number, and one or two of the four fastening holes may be provided in a region overlapping the trailing arm in the carrier, and rest of the fastening holes may be provided in a region not overlapping the trailing arm.

### EFFECTS OF THE INVENTION

The torsion beam suspension of the present invention makes it possible to reduce an offset amount between a rotation center of the wheel and an axial center of the trailing arm because the carrier is fixed to the trailing arm in such a manner that some of the fastening holes and the trailing arm overlap each other as viewed from the axial direction of the axle shaft. Thus, it is possible to suppress generation of a moment. Accordingly, stiffness required for a torsion beam suspension can be made smaller. As a result, it is possible to make the torsion beam suspension smaller in size and lighter in weight.

Moreover, by forming the gap for confirming fastening of the fastening members, fastening of the fastening members can be easily confirmed. Furthermore, in the configuration in which the pair of arm members is joined together to form the trailing arm of a hollow shape and in which the pair of arm members each has the tool insertion holes formed therein, such arm members can be easily formed by pressing. In addition, by providing the guide members, the fastening members can be suppressed from falling down into an inside of the trailing arm. In the carrier, by restricting the fastening holes provided in the region overlapping the trailing arm to one or two of the four fastening holes, excessive reduction in stiffness of the trailing arm can be suppressed when the tool insertion holes are formed in the trailing arm.

### BRIEF DESCRIPTION OF THE DRAWINGS

FIG. 1 is a perspective view of a torsion beam suspension according to a present embodiment.
FIG. 2 is a side view of the torsion beam suspension according to the present embodiment.
FIG. 3 is an enlarged view of proximity of a carrier of the torsion beam suspension according to the present embodiment.
FIG. 4 is a view in a direction of an arrow "A" in FIG. 3.
FIG. 5 is a cross-sectional view taken along a line V-V in FIG. 2.
FIG. 6 is a perspective view explaining mounting of a wheel support member according to the present embodiment.
FIG. 7 is a perspective view showing a wheel support member according to another embodiment.
FIG. 8 is a perspective view of the torsion beam suspension according to the present embodiment including guide members.
FIGS. 9A-9D are explanatory diagrams of the guide members.
FIG. 10 is a perspective view of a conventional torsion beam suspension.

### EXPLANATION OF REFERENCE NUMERALS

1, 3, 100... trailing arm, 2...torsion beam, 4, 6... arm member, 7...gusset, 8...collar, 10...sparing seat member, 12, 101...carrier, 12a, 12b...side wall, 12c...mounting wall, 12d...bottom wall, 14, 26... fitting hole, 16-19... fastening hole, 20, 22... tool insertion hole, 24...carrier plate, 28-31 fastening hole, 28-31...fastening hole, 32...axle hub, 34...boss portion, 36... screw hole, 38... bolt, 39... socket, 42...spindle, 44...plate, 46...screw hole, 50, 52... guide member

### MODE FOR CARRYING OUT THE INVENTION

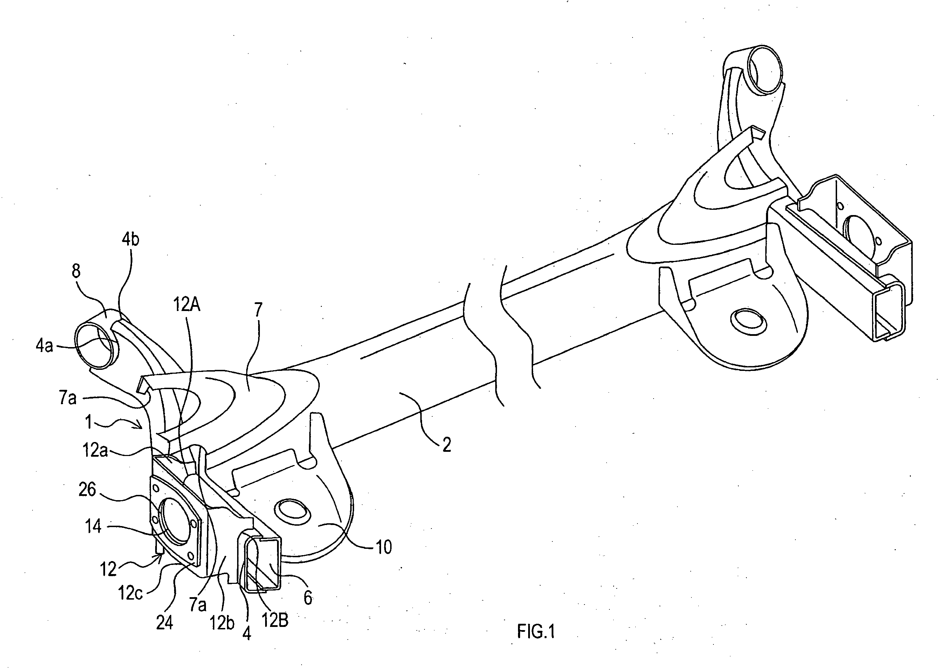

As shown in FIG. 1, a left trailing arm 1 and a right trailing arm 3 are connected to each other by a torsion beam 2 to thereby configure a torsion beam suspension according to the present embodiment. The trailing arm 1 and the trailing arm 3 are bilaterally-symmetric to each other. The trailing arms 1, 3 are formed in a hollow shape.

The torsion beam 2 is arranged between the trailing arms 1 and 3, and both ends of the torsion beam 2 are each welded to the trailing arms 1, 3, respectively. Since the torsion beam suspension according to the present embodiment has a bilaterally-symmetric shape, an explanation will be given herein focusing on the left trailing arm 1.

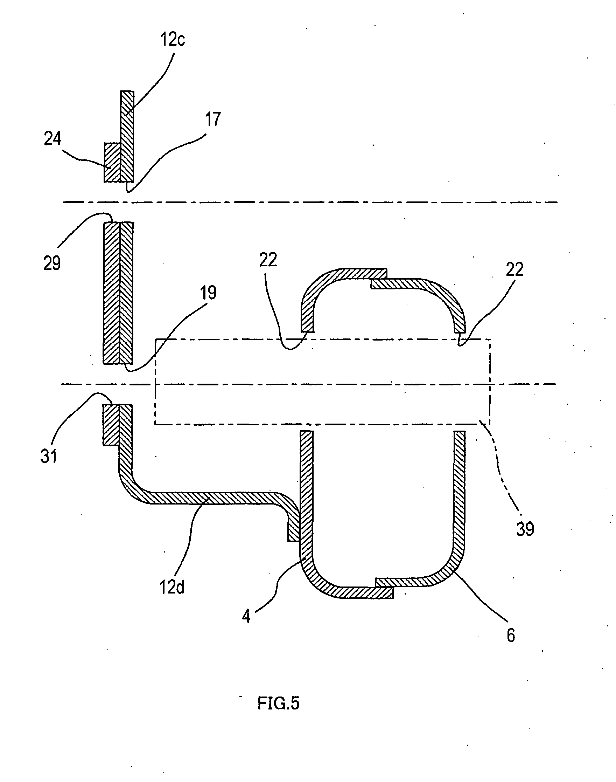

As shown in FIG. 1 and FIG. 5, the trailing arm 1 is formed by joining a pair of arm members 4, 6 together, which can be divided in a width direction of a vehicle body along an axial direction of the trailing arm 1.

The pair of arm members 4, 6 is each formed by pressing so that a cross-section perpendicular to an axial direction of the pair of arm members 4, 6 is of an approximately U shape. In the arm members 4, 6, respective opening sides thereof are fitted to each other so that an inside of the trailing arm 1 is a hollow shape. In the present embodiment, the both arm members 4, 6 are fitted to each other in such a manner that the arm member 6 positioned on an inner side of the vehicle body enters an inside of the arm member 4 positioned on an outer side of the vehicle body. The pair of arm members 4, 6 is joined together by welding. As a method of welding, any of arc welding, laser welding, plasma welding, and the like may be employed.

Both end portions of the trailing arm 1 are formed in an approximately rectangular shape in cross section. At the end portions, a width in a vehicle body's width direction is relatively small, and a width in a vehicle body's vertical direction is relatively large. That is, at the end portions, a cross section is shaped like a rectangle elongated in the vehicle body's vertical direction. A middle part of the trailing arm 1 is formed so that a width in the vehicle body's width direction is relatively large, i.e., in a shape bulging in the vehicle body's width direction. To the bulging middle part of the trailing arm 1, the torsion beam 2 is connected.

In the present embodiment, the torsion beam 2 is formed in an approximately V shape or an approximately U shape in cross section. The torsion beam 2 opens toward a lower side. The torsion beam 2 may be formed and disposed so as to open toward a front side of the vehicle body.

A gusset 7 is disposed extending across the trailing arm 1 and the torsion beam 2. The gusset 7 is disposed on the opposite side of the opening side of the torsion beam 2, i.e., on an upper side of the torsion beam 2. The gusset 7 opens toward a lower side of the vehicle body. The gusset 7 is formed in an approximately U shape in cross section. The gusset 7 can be formed by pressing or the like of a desired plate material.

The gusset 7 is provided along a longitudinal direction of the torsion beam 2. The gusset 7 is formed in such a manner that a width thereof gradually becomes smaller from a side of the trailing arm 1 toward a side of the torsion beam 2. The gusset 7 has notches 7a formed therein corresponding to a cross-sectional shape of the trailing arm 1. The gusset 7 and the trailing arm 1 are secured to each other by welding with the trailing arm 1 in contact with the notches 7a.

At one end of the trailing arm 1, notches 4a, 4b of an arc-like shape are formed in the pair of arm members 4, 6, respectively. To the notches 4a, 4b, a collar 8 is fixed by welding. The trailing arm 1 is swingably supported by a not-shown vehicle body via the collar 8. A spring seat member 10 is mounted extending across the trailing arm 1 and the torsion beam 2 by welding.

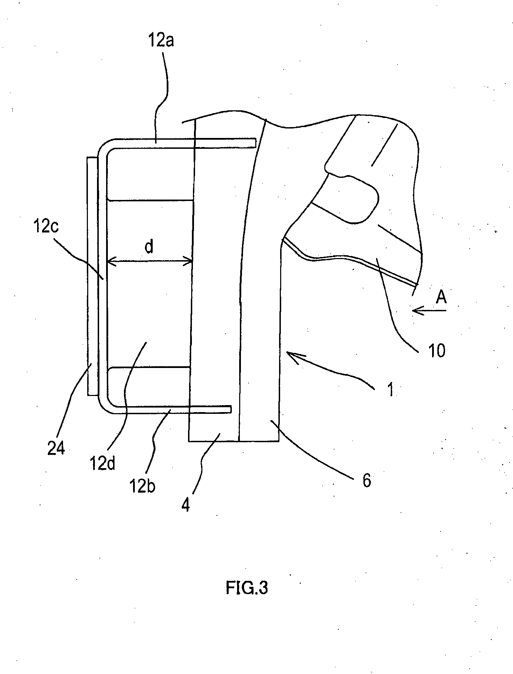

At the other end of the trailing arm 1, a carrier 12 is secured by welding to an outside of the trailing arm 1. A not-shown wheel is rotatably supported via the carrier 12. The carrier 12 is formed by bending in a U shape in cross section. As shown in FIG. 3, the carrier 12 has a pair of side walls 12a, 12b facing each other and a mounting wall 12c connecting the pair of side walls 12a, 12b to each other, formed therein. The side walls 12a, 12b respectively have notches 12A, 12B (see FIG. 1) formed therein corresponding to a cross-sectional shape of the trailing arm 1 (specifically, a cross-sectional shape of the arm member 4). The trailing arm 1 (specifically, the arm member 4) is fitted to the notches 12A, 12B, and the trailing arm 1 and the carrier 12 are secured to each other by welding.

Dimensions of the side walls 12a, 12b are determined so that a predetermined gap "d" is formed between the mounting wall 12c and the trailing arm 1. The gap opens upwardly. That is, the gap between the mounting wall 12c and the trailing arm 1 is designed to be visible from an upper side. In the present embodiment, a bottom wall 12d extending from the mounting wall 12c is secured to the trailing arm 1 by welding to partly close a lower side of the gap.

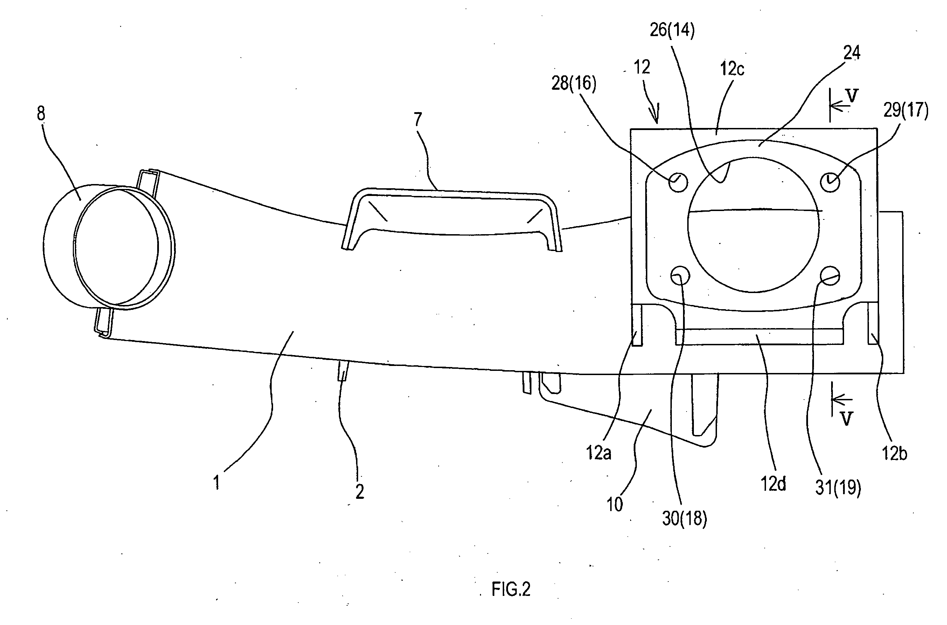

The mounting wall 12c is formed flatly. In an approximately center of the mounting wall 12c, a fitting hole 14 is formed. As shown in FIG. 2, a plurality of fastening holes 16-19 are formed around the fitting hole 14. In the present embodiment, the four fastening holes 16-19 are formed as concyclic holes around the fitting hole 14. At an upper side of the fitting hole 14, the two fastening holes 16, 17 are disposed, and at a lower side of the fitting hole 14, the two fastening holes 18, 19 are disposed.

The carrier 12 and the trailing arm 1 are arranged in such a manner that, when secured to each other, at least a part of the carrier 12 and the trailing arm 1 overlap each other as viewed from an axial direction of an axle shaft. In the present embodiment, the two fastening holes 18, 19 at the lower side from among the four fastening holes 16-19 overlap the trailing arm 1 as viewed from the axial direction of the axle shaft, and the two fastening holes 16, 17 at the upper side are disposed higher than the trailing arm 1 as viewed from the axial direction of the axle shaft.

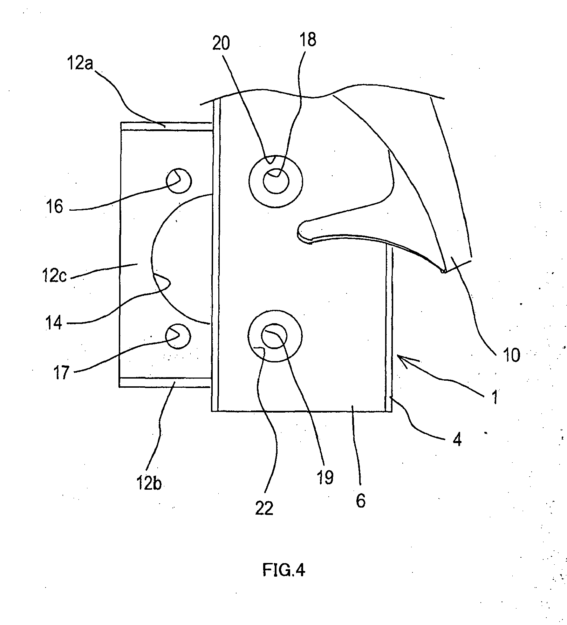

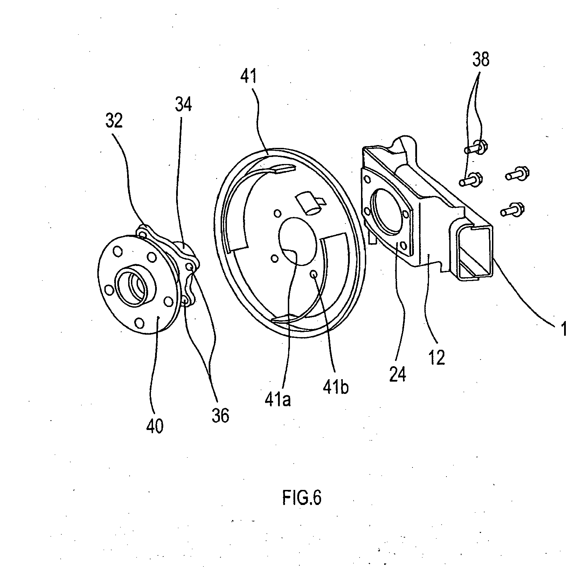

As shown in FIG. 4 and FIG. 5, the trailing arm 1 has tool insertion holes 20, 22 formed therein approximately coaxially with the two fastening holes 18, 19, respectively, of the carrier 12. The tool insertion holes 20, 22 are formed in each of the pair of arm members 4, 6. These tool insertion holes 20, 22 are formed in such a manner that, when the arm members 4, 6 are fitted to each other, the tool insertion hole 20 of the arm member 4 and the tool insertion hole 20 of the arm member 6 are positioned coaxially with each other, and the tool insertion hole 22 of the arm member 4 and the tool insertion hole 22 of the arm member 6 are positioned coaxially with each other. A hole diameter of the tool insertion holes 20, 22 is set such that a tool that fastens bolts 38 (see FIG. 6) as fastening members can be inserted into the tool insertion holes 20, 22. The bolts 38 are members for mounting an axle hub 32 (see FIG. 6) as a wheel support member to the mounting wall 12c. In the present embodiment, when the pair of arm members 4, 6 is press-formed, the tool insertion holes 20, 22 can be formed concurrently. Therefore, it is easy to form the tool insertion holes 20, 22.

When the bolts 38 are hexagon head bolts, a socket 39 (see FIG. 5) for a wrench as a tool is inserted into the tool insertion holes 20, 22, and the bolts 38 can thereby be fastened. The predetermined gap between the mounting wall 12c and the trailing arm 1 is formed in such a size that fastening of the bolts 38 can be confirmed. For example, the gap is formed in such a size that heads of the fastened bolts 38 are visible via the gap.

In addition, a carrier plate 24 is overlapped with the mounting wall 12c on the outer side of the vehicle body. Formed in the carrier plate 24 are a fitting hole 26, corresponding to the fitting hole 14 of the mounting wall 12c, and a plurality of fastening holes 28-31, corresponding to the plurality of fastening holes 16-19 of the mounting wall 12c. The carrier 12 and the carrier plate 24 may be formed integrally with each other.

As shown in FIG. 6, a braking member 41 is stacked in a layer on the carrier plate 24. Formed in the braking member 41 are a fitting hole 41a corresponding to the fitting holes 14, 26, and four fastening holes 41b corresponding to the fastening holes 16-19 and 28-31. A boss portion 34 of the axle hub 32 is inserted into the fitting hole 14 of the mounting wall 12c, the fitting hole 26 of the carrier plate 24, and the fitting hole 41a of the braking member 41.

The axle hub 32 has a plurality of screw holes 36 formed therein. The bolts 38 are screwed into the screw holes 36 of the axle hub 32 via the fastening holes 16-19 of the mounting wall 12c, the fastening holes 28-31 of the carrier plate 24, and the fastening holes 41b of the braking member 41. The axle hub 32 is thereby fixed to the mounting wall 12c. An axle 40 is rotatably supported by the axle hub 32. The axle 40 has a not-shown disc wheel mounted thereon.

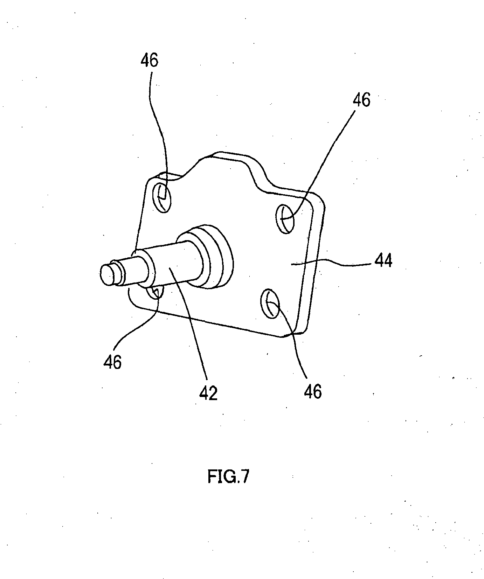

It is to be noted that the present embodiment is not limited to a case where the axle hub 32 is mounted. As shown in FIG. 7, for example, a case can be assumed in which a plate 44 as a wheel support member is mounted on the mounting wall 12c by means of the plurality of bolts 38. The plate 44 has a spindle 42 fixed thereto and a plurality of screw holes 46 formed therein. Fastening members are not limited to the bolts 38. In a case where bolts are provided on a wheel support member, nuts may be used as fastening members.

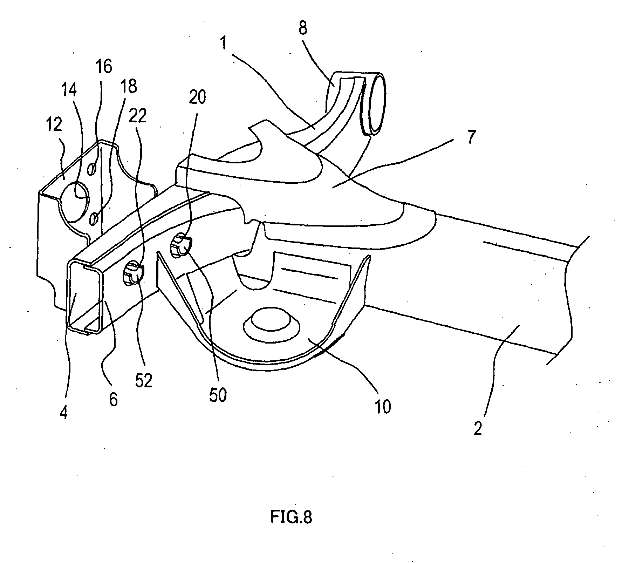

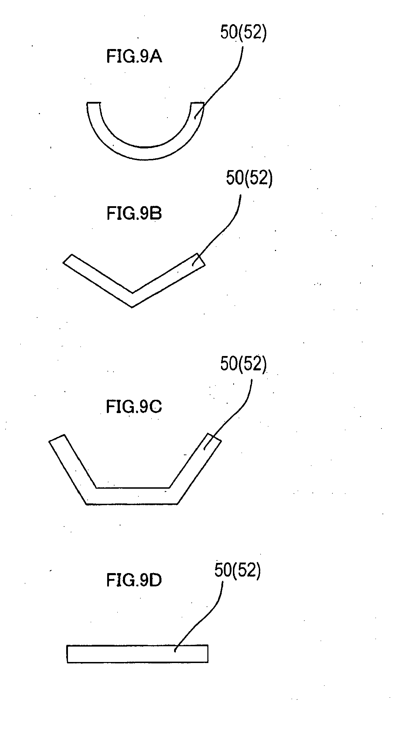

As shown in FIG. 8, guide members 50, 52 may be inserted into the tool insertion holes 20, 22, respectively, in advance. The guide members 50, 52 are formed to a length extending across the tool insertion holes 20, 22 formed in the pair of arm members 4, 6, or to a length reaching the mounting wall 12c. As shown in FIG. 9A, the guide members 50, 52 are formed in an approximately semicircular arc-like shape so as to be able to be inserted into the tool insertion holes 20, 22.

The guide members 50, 52 are not limited to the approximately semicircular arc-like shape and, as shown in FIG. 9B, may be formed in an approximately V shape. Alternatively, the guide members 50, 52 may be formed by bending both sides of a flat plate as shown in FIG. 9C, or further may be a flat plate-like shape as shown in FIG. 9D. The tool insertion holes 20, 22 are each formed in a size that allows insertion of a tool even after the guide members 50, 52 are inserted into the tool insertion holes 20, 22.

The guide members 50, 52 suppress the bolts 38 from falling down into an inside of the trailing arm 1 of a hollow shape when the bolts 38 are being fastened. The guide members 50, 52 may be provided attachably and detachably so as to be able to be removed after the bolts 38 are fastened.

The right trailing arm 3 also has a configuration similar to that of the left trailing arm 1 as described above. The right trailing arm 3 is formed by joining a pair of arm members together, which has an approximately U shape in cross section as divided along an axial direction of the trailing arm 3. The right trailing arm 3 also has a collar mounted at one end thereof and a carrier mounted at the other end thereof.

Next, a description will be given as to an operation of the trailing arm type suspension of the present embodiment as described above.
When the axle hub 32 is mounted on the mounting wall 12c, the bolts 38 are screwed into the screw holes 36 of the axle hub 32 via the fastening holes 16-19 of the mounting wall 12c and the fastening holes 28-31 of the carrier plate 24. The carrier plate 24 and the axle hub 32 are thereby fixed to the mounting wall 12c. In the present embodiment, the braking member 41 is further fixed.

When the bolts 38 are being fastened, the bolts 38 are inserted into the tool insertion holes 20, 22. At this time, the bolts 38 placed in the socket of the wrench as a fastening tool, for example, are guided by the guide members 50, 52 so as not to fall down into the inside of the trailing arm 1.

Then, the bolts 38 reach the screw holes 36 of the axle hub 32 via the fastening holes 16-19 and the fastening holes 28-31, and the bolts 38 are rotated using a fastening tool. Thus, the axle hub 32 is mounted on the mounting wall 12c with the bolts 38.

As above, the carrier 12 is fixed to the trailing arm 1 with some of the fastening holes, i.e., the fastening holes 16, 17, overlapped with the trailing arm 1 in the axial direction of the axle shaft and, therefore, an offset amount between a rotation center and an axial center of the trailing arm 1 can be reduced. In such a case, even when an acting force acts on the wheels from left and right directions, a moment due to this acting force is small, and lateral stiffness is improved. Thus, it is possible to make the torsion beam suspension smaller in size and lighter in weight.

Moreover, by forming the gap for confirming fastening of the bolts 38 as fastening members, fastening of the bolts 38 can be easily confirmed. Furthermore, the pair of arm members 4, 6 with the tool insertion holes 20, 22 can be easily formed by pressing. In addition, by providing the guide members 50, 52, the bolts 38 can be suppressed from falling down into the hollow inside of the trailing arm 1. By overlapping the two fastening holes 16, 17, from among the four fastening holes 16-19, with the trailing arm 1, excessive reduction in stiffness of the trailing arm 1 due to formation of the tool insertion holes 20, 22 can be suppressed.

The present invention is not to be limited by the above-described embodiments, and can be practiced in various manners within the scope not departing from the spirit of the present invention.

## Claims

1. A torsion beam suspension for a vehicle, comprising:
a left-right pair of trailing arms (1) of a hollow shape, each trailing arm (1) being swingably supported at one end thereof by a vehicle body and having at the other end thereof a carrier fixed thereto, via which a wheel is rotatably supported; and
a torsion beam (2) that connects the left-right pair of trailing arms (1) to each other,
wherein the carrier has a plurality of fastening holes (16-19) formed therein, into which fastening members (38) are inserted to mount to the carrier a wheel support member that rotatably supports the wheel, and the carrier includes a mounting wall (12) having the fastening holes formed therein and two side walls (12a-12b) each formed at each side of the mounting wall,
wherein the side walls are fixed to the trailing arm, and a gap (d) for confirming fastening of the fastening members is formed between the mounting wall and the trailing arm,
wherein the plurality of fastening holes are arranged such that some of the plurality of fastening holes overlap the trailing arm as viewed from an axial direction of an axle shaft, and
wherein the trailing arm is formed by joining a pair of arm members together, which has an approximately U shape in cross section as divided along an axial direction of the trailing arm, and in the pair of arm members, tool insertion holes (20, 22), into which a fastening tool for the fastening members is insertable, are formed in a penetrating manner so as to be positioned approximately coaxially with the fastening holes.

2. The torsion beam suspension according to claim 1, wherein guide members that suppress the fastening members from falling down are inserted into the tool insertion holes.

3. The torsion beam suspension according to claim 2, wherein the guide members are formed in an approximately semicircular arc-like shape.

4. The torsion beam suspension according to claim 2, wherein the guide members are formed in an approximately V shape.

5. The torsion beam suspension according to claim 2, wherein the guide members are formed in a concave shape in cross section by bending a flat plate.

6. The torsion beam suspension according to claim 2, wherein the guide members have a flat plate-like shape.

7. The torsion beam suspension according to any one of claims 1 to 6, wherein the fastening holes are provided four in number, and one or two of the four fastening holes is/are provided in a region overlapping the trailing arm in the carrier, and rest of the fastening holes are provided in a region not overlapping the trailing arm.

## Patentansprüche

1. Verbundlenker-Aufhängung für ein Fahrzeug, aufweisend:
ein links und rechts angeordnetes Paar von (gezogenen) Schwingen (1) von hohler Form, wobei jede Schwinge (1) an ihrem einen Ende durch einen Fahrzeugkörper schwenkbar gelagert ist und an ihrem anderen Ende eine an diesem befestigte Trägereinrichtung aufweist, mittels der ein Rad drehbar gelagert ist; und
einen Verbundlenker (Torsionsträger) (2), der das links und rechts angeordnete Paar von Schwingen (1) miteinander verbindet,
wobei die Trägereinrichtung eine Mehrzahl von in dieser ausgebildeten Befestigungslöchern (16 - 19) aufweist, in welche Befestigungselemente (38) eingesetzt sind, um die Trägereinrichtung an einem Radlagerungselement zu befestigen, welches das Rad drehbar lagert, und die Trägereinrichtung eine Befestigungswand (12), in der die Befestigungslöcher ausgebildet sind, und zwei Seitenwände (12a - 12b) aufweist, die jeweils auf beiden Seiten der Befestigungswand ausgebildet sind,
wobei die Seitenwände an der Schwinge fest angebracht sind, und ein Zwischenraum (d) zur Bestätigung einer festen Anbringung der Befestigungselemente zwischen der Befestigungswand und der Schwinge ausgebildet ist,
wobei die Mehrzahl von Befestigungslöchern derart angeordnet sind, dass einige von der Mehrzahl von Befestigungslöchern die Schwinge überlappen, und zwar gesehen von einer Axialrichtung eines Achsschaftes, und
wobei die Schwinge dadurch ausgebildet ist, dass ein Paar von Schwingenelementen miteinander verbunden ist, wobei, bei Teilung entlang einer Axialrichtung der Schwinge, diese einen näherungsweise U-förmigen Querschnitt aufweist, und in dem Paar von Schwingenelementen Werkzeugeinführlöcher (20, 22), in die ein Befestigungswerkzeug für die Befestigungselemente eingeführt werden kann, in durchdringender Weise so ausgebildet sind, dass sie näherungsweise koaxial zu den Befestigungslöchern positioniert sind.

2. Verbundlenker-Aufhängung nach Anspruch 1, wobei Führungselemente, die ein Herunterfallen der Befestigungselemente verhindern, in die Werkzeugeinführlöcher eingesetzt sind.

3. Verbundlenker-Aufhängung nach Anspruch 2, wobei die Führungselemente in einer näherungsweise halbkreisförmigen bogenartigen Gestalt ausgebildet sind.

4. Verbundlenker-Aufhängung nach Anspruch 2, wobei die Führungselemente näherungsweise V-förmig ausgebildet sind.

5. Verbundlenker-Aufhängung nach Anspruch 2, wobei die Führungselemente im Querschnitt gesehen in konkaver Gestalt ausgebildet sind, und zwar durch Biegen einer ebenen Platte.

6. Verbundlenker-Aufhängung nach Anspruch 2, wobei die Führungselemente eine ebene plattenartige Gestalt haben.

7. Verbundlenker-Aufhängung nach einem der Ansprüche 1 bis 6, wobei die Anzahl der Befestigungslöcher vier beträgt und eines oder zwei der vier Befestigungslöcher in einem die Schwinge überlappenden Gebiet in der Trägereinrichtung vorgesehen ist/sind, und der übrige Teil der Befestigungslöcher in einem die Schwinge nicht überlappenden Gebiet vorgesehen ist.

## Revendications

1. Suspension de longeron de torsion pour un véhicule, comprenant :
une paire de bras oscillants gauche - droit (1) de forme creuse, chaque bras oscillant (1) étant supporté de manière oscillante au niveau de l'une de ses extrémités par une carrosserie de véhicule et ayant, au niveau de son autre extrémité, un support fixé à ce dernier, via lequel une roue est supportée en rotation ; et
un longeron de torsion (2) qui raccorde la paire de bras oscillants gauche -droit (1) entre eux,
dans laquelle le dispositif de support a une pluralité de trous de fixation (16 - 19) formés à l'intérieur de ce dernier, dans lesquels sont insérés les éléments de fixation (38), pour monter, sur le dispositif de support, un élément de support de roue qui supporte la roue de manière rotative et le dispositif de support comprend une paroi de montage (12) ayant les trous de fixation formés à l'intérieur de cette dernière et deux parois latérales (12a - 12b), chacune formée au niveau de chaque côté de la paroi de montage,
dans laquelle les parois latérales sont fixées sur le bras oscillant, et un espace (d) pour confirmer la fixation des éléments de fixation est formé entre la paroi de montage et le bras oscillant,
dans laquelle la pluralité de trous de fixation sont fixés de sorte que certains de la pluralité de trous de fixation recouvrent le bras oscillant, comme observé depuis une direction axiale d'un arbre d'essieu, et
dans laquelle le bras oscillant est formé en assemblant une paire d'éléments de bras ensemble, qui a approximativement une forme de U en coupe, lorsqu'ils sont séparés le long d'une direction axiale du bras oscillant et dans la paire d'éléments de bras, des trous d'insertion d'outil (20, 22), dans lesquels on peut insérer un outil de fixation pour les éléments de fixation, sont formés d'une manière pénétrante afin d'être positionnés approximativement de manière coaxiale avec les trous de fixation.

2. Suspension de longeron de torsion selon la revendication 1, dans laquelle des éléments de guidage qui empêchent la chute des éléments de fixation sont insérés dans les trous d'insertion d'outil.

3. Suspension de longeron de torsion selon la revendication 2, dans laquelle les éléments de guidage sont formés selon une forme d'arc approximativement semi-circulaire.

4. Suspension de longeron de torsion selon la revendication 2, dans laquelle les éléments de guidage sont formés approximativement selon une forme de V.

5. Suspension de longeron de torsion selon la revendication 2, dans laquelle les éléments de guidage sont formés selon une forme concave en coupe en cintrant une plaque plate.

6. Suspension de longeron de torsion selon la revendication 2, dans laquelle les éléments de guidage ont une forme de plaque plate.

7. Suspension de longeron de torsion selon l'une quelconque des revendications 1 à 6, dans laquelle les trous de fixation sont prévus au nombre de quatre et un ou deux des quatre trous de fixation est / sont prévu(s) dans une région chevauchant le bras oscillant dans le dispositif de support, et le reste des trous de fixation est prévu dans une région ne chevauchant pas le bras oscillant.
